# EUROPEAN PATENT APPLICATION

(11) **EP 4 099 712 A1**
(43) Date of publication of application: **07.12.2022**
(21) Application number: 21766942.3
(22) Date of filing: 05.03.2021
(51) Int. Cl.: H04Q 11/00, H04J 3/06

(54) **SERVICE BEARING METHOD, APPARATUS AND SYSTEM**

(30) Priority: 11.03.2020 CN 202010167818
(71) Applicant: Huawei Technologies Co., Ltd., Shenzhen, Guangdong 518129 (CN)
(72) Inventor: CHEN, Yujie, Shenzhen, Guangdong 518129 (CN); LI, Jiang, Shenzhen, Guangdong 518129 (CN); LUO, Jun, Shenzhen, Guangdong 518129 (CN); SU, Wei, Shenzhen, Guangdong 518129 (CN)
(74) Representative: Epping - Hermann - Fischer
(86) International application number: PCT/CN2021/079349
(87) International publication number: WO 2021/180007

(57) **Abstract**

The present invention provides a low-rate service carrying method, an apparatus, and a system. A possible service carrying method includes: receiving, by a device, low-rate service data; then, mapping, by the device, the service data to one or more optical transport network (OTN) service transmission frames, where a rate of the one or more OTN service transmission frames is 1.25 gigabits per second (Gbps) or 10.3125 Gbps; and finally, sending, by the device, the one or more OTN service transmission frames by using a GE or 10 GE transmission module, where a rate of the transmission module matches the rate of the one or more OTN service transmission frames. For example, the device may use an optical service unit frame to carry a low-rate service, and then perform processing such as adding frame alignment signal information or encoding on the optical service unit frame to obtain the OTN service transmission frame. By newly defining a data frame to implement service carrying by using an Ethernet transmission module, the service carrying technology provided in this application may reduce service carrying complexity, thereby reducing a processing delay and device costs.

## Description

This application claims priority to Chinese Patent Application No. 202010167818.8, filed with the China National Intellectual Property Administration on March 11, 2020, and entitled "SERVICE CARRYING METHOD, APPARATUS, AND SYSTEM", which is incorporated herein by reference in its entirety.

### TECHNICAL FIELD

This application relates to the field of optical communications technologies, and in particular, to a carrying technology for low-rate service data.

### BACKGROUND

As a core technology of a backbone bearer network, an optical transport network (optical transport network, OTN) includes optical bearer containers with a plurality of rates, and the optical bearer containers are used to carry a plurality of types of high-rate service data. For example, an optical transport unit 1 (optical transport unit 1, OTU1) is a line interface container with a lowest rate in an existing OTN technology, and a rate of the optical transport unit 1 is approximately 2.5 gigabits per second (Gigabit per second, Gbps). The optical transport unit 1 may be configured to carry two pieces of 1 Gbps Ethernet service data.

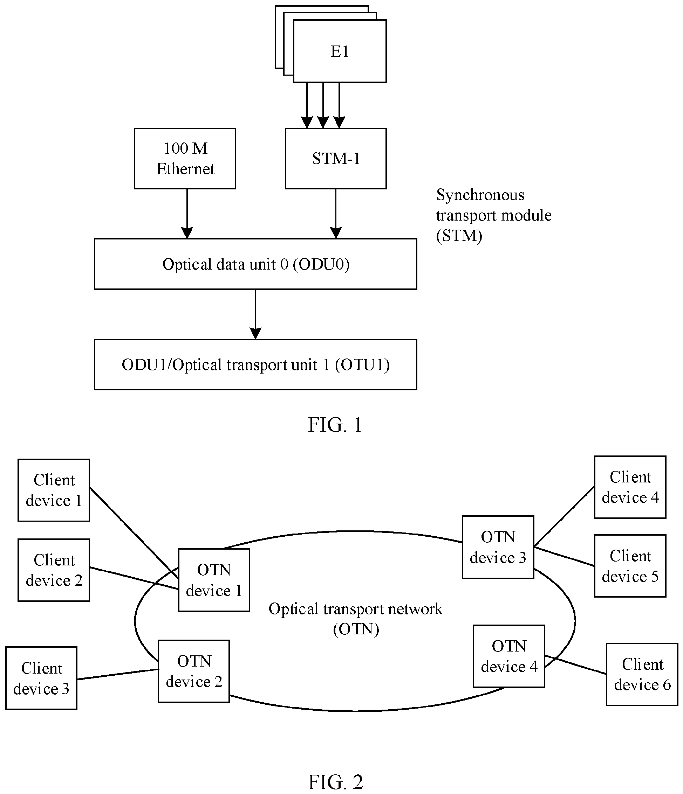

As a synchronous digital hierarchy (synchronous digital hierarchy, SDH) technology is phased out from the market and the OTN technology develops, application of the OTN technology extends from a backbone network to a metropolitan area network, and even to an access network. As a result, a growing low-rate service carrying requirements are imposed on the OTN technology. Currently, a rate of a low-rate service ranges from 2 Mbps to several hundred Mbps. A current processing method is as follows: A low-rate signal is multiplexed into a high-rate signal, and then the high-rate signal is carried through an existing optical bearer container. FIG. 1 is a schematic diagram of a mapping and multiplexing path of a low-rate service in the conventional technology. As shown in FIG. 1, when a hundred megabit (100 M) Ethernet (Fast Ethernet, FE) needs to use the OTN for transmission, the FE is first mapped to an optical data unit (Optical Data Unit 0, ODUO) frame with a rate of approximately 1.25 Gbps, and then is transmitted in the OTN by using the OTU1. In this way, transmission efficiency is relatively low, and occupied bandwidth of the ODUO is less than 10%. FIG. 1 further shows a mapping of an E1 signal (with a rate of 2048 kbps). Specifically, a plurality of E1 signals are first mapped to a synchronous transport module (synchronous transport module, STM)-1 interface signal. The STM-1 is one of SDH signals. Then, the STM-1 interface signal is mapped to the ODUO, and is transmitted in the OTN by using the OTU1.

A problem of the current processing method is that, a low-rate signal needs to be multiplexed for a plurality of times to form a high-rate signal, and then the high-rate signal is carried by using the OTN technology. The processing procedure is complex and inefficient. In addition, because both a sending device and a receiving device need to perform frame processing hierarchically, a signal processing latency is large.

### SUMMARY

The present invention provides a service carrying method, an apparatus, and a system, to resolve current problems of low efficiency and a long processing delay that are caused by a complex processing procedure.

According to a first aspect, an embodiment of this application provides a service carrying method. The method includes: first, a device receives service data; then the device maps the service data to one or more optical transport network (OTN) service transmission frames, where a rate of the one or more OTN service transmission frames is approximately 1.25 gigabits per second (Gbps) or 10.3125 Gbps; and finally, the device sends the one or more OTN service transmission frames by using an X Gigabit Ethernet transmission module, where a rate of the X Gigabit Ethernet transmission module matches the rate of the one or more OTN service transmission frames, and X is equal to 1 or 10.

It should be understood that a rate of approximately 1.25 gigabits per second (Gbps) or 10.3125 Gbps means that the rate is allowed to float within a particular range. For example, the rate floats within 12.5 Gbps ± 100 ppm, where ppm represents a part per million.

In this embodiment of this application, a new OTN frame is defined to be used together with an Ethernet transmission module, so as to reduce service carrying complexity and device costs.

In a possible implementation, that the device maps the service data to one or more OTN service transmission frames specifically includes: The device maps the service data to a plurality of optical service unit (OSU) frames, where each of the plurality of OSU frames is an integer multiple of a 16-byte block, the OSU frame includes an overload area and a payload area, the payload area is used to carry the service data, the overload area is used to carry a frame overhead; and then the device performs adaptation processing on the plurality of OSU frames that carry the service data, to obtain the plurality of OTN service transmission frames.

For example, the adaptation processing mentioned in the foregoing implementation may include any one of the following: adding frame alignment signal information to each of the plurality of OSU frames; adding frame alignment signal information to and performing encoding on each of the plurality of OSU frames; or adding frame alignment signal information to and performing encoding and compression on each of the plurality of OSU frames, where the performing compression includes deleting padding information in the plurality of OSU frames, and the encoding is 8B/10B encoding or 64B/66B encoding. Performing a compression operation may further reduce a delay introduced by service processing.

For example, the adding frame alignment signal information may specifically include: adding a frame start identifier and a frame end identifier to each of the plurality of OSU frames; or inserting the frame alignment signal information before each of the plurality of OSU frames.

In another possible implementation, that the device maps the service data to one or more OTN service transmission frames specifically includes: the device maps the service data to a plurality of optical service unit (OSU) frames, where each of the plurality of OSU frames is an integer multiple of a 16-byte block, the OSU frame includes an overload area and a payload area, the payload area is used to carry the service data, the overload area is used to carry a frame overhead; and then the device maps the plurality of OSU frames that carry the service data to one optical data unit (ODU) frame, to obtain the OTN service transmission frame.

For example, the ODU frame is of a structure with four rows and 3824-byte columns, and includes only a frame header indication, a multiframe indication, a link monitoring overhead, a payload type, and a payload area, where the frame header indication is used to indicate a start location of the optical data unit frame, the multiframe indication is used to indicate a location of the optical data unit frame in a group of consecutive optical data unit frames, the link monitoring overhead is used to perform link monitoring, the payload type is used to indicate a mapping manner of a service carried in the optical data unit frame, and the payload area is used to carry the plurality of OSU frames. For another example, the ODU frame is of a structure with rows whose quantity is an integer multiple of 64 and 5140-bit columns, and includes an alignment overhead and a payload area, where the alignment overhead is used to indicate a start location of the optical data unit frame, and the payload area is used to carry the plurality of OSU frames. In the latter example, an overhead carried in the optical data unit frame is relatively small, which may improve bandwidth utilization of a data frame.

In the foregoing another implementation, the ODU frame may be the OTN service transmission frame. Alternatively, the mapping the plurality of OSU frames that carry the service data to one ODU frame, to obtain the OTN service transmission frame specifically includes: mapping the plurality of OSU frames to one ODU frame; and performing one or more of the following operations on the ODU frame to obtain the OTN service transmission frame: adding FEC information, adding frame alignment signal information, and performing encoding processing, where the encoding processing is 8B/10B encoding processing or 64B/66B encoding processing.

It should be noted that, when X = 1, that the X Gigabit Ethernet module sends the OTN service transmission frame specifically includes: sending the OTN service transmission frame by using a twisted pair or a 1 GE optical module; when X = 10, that the X Gigabit Ethernet module sends the OTN service transmission frame specifically includes: sending the OTN service transmission frame by using a 10 GE optical module.

According to a second aspect, an embodiment of this application provides a service processing apparatus. The apparatus includes a memory and a processor. The memory is configured to store a computer program, and the processor is configured to perform the following method:
receiving service data; mapping the service data to one or more optical transport network (OTN) service transmission frames, where a rate of the one or more OTN service transmission frames is 1.25 gigabits per second (Gbps) or 10.3125 Gbps; and sending the OTN service transmission frame to an X Gigabit Ethernet transmission module, where a rate of the X Gigabit Ethernet transmission module matches the rate of the one or more OTN service transmission frames, and X is equal to 1 or 10.

For possible specific implementations in the foregoing steps, refer to the descriptions of the specific implementations of the first aspect. Details are not described herein again. It should be understood that the service processing apparatus may be specifically a chip or a chipset that includes a plurality of chips.

According to a third aspect, an embodiment of this application provides a device. The device includes the service processing apparatus and the X Gigabit Ethernet transmission module according to any one of the second aspect or the specific implementations of the second aspect. For example, the device may be a client device, and the client device sends its service data to an OTN network by using the X Gigabit Ethernet transmission module, to implement transmission.

According to a fourth aspect, an embodiment of this application provides a service obtaining method. The method includes: a device receives one or more optical transport network (OTN) service transmission frames by using an X Gigabit Ethernet transmission module, where a rate of the one or more OTN service transmission frames is 1.25 gigabits per second (Gbps) or 10.3125 Gbps, a rate of the X Gigabit Ethernet transmission module matches the rate of the one or more OTN service transmission frames, and X is equal to 1 or 10; and the device obtains, through parsing, service data from the one or more OTN service transmission frames.

In a possible implementation, the obtaining, through parsing, service data from the one or more OTN service transmission frames specifically includes: deleting frame alignment signal information from, or decoding and deleting frame alignment signal information from the one or more OTN service transmission frames to obtain a plurality of OSU frames, where each of the plurality of OSU frames is an integer multiple of a 16-byte block, the OSU frame includes an overhead area and a payload area, the payload area is used to carry the service data, and the overhead area is used to carry a frame overhead; and obtaining, through demapping, the service data from the plurality of OSU frames.

For example, the one or more OTN service transmission frames are optical data unit (ODU) frames, and the optical data unit frame is of any one of the following two structures:

A first structure is a structure with four rows and 3824-byte columns, and includes only a frame header indication, a multiframe indication, a link monitoring overhead, a payload type, and a payload area, where the frame header indication is used to indicate a start location of the ODU frame, the multiframe indication is used to indicate a location of the ODU frame in a group of consecutive ODU frames, the link monitoring overhead is used to perform link monitoring, the payload type is used to indicate a mapping manner of a service carried in the ODU frame, and the payload area is used to carry the plurality of OSU frames; and a second structure is a structure with rows whose quantity is an integer multiple of 64 and 5140-bit columns, and includes an alignment overhead and a payload area, where the alignment overhead is used to indicate a start location of the ODU frame, and the payload area is used to carry the plurality of OSU frames.

The obtaining, through parsing, service data from the one or more OTN service transmission frames specifically includes:
obtaining, through demapping, the plurality of OSU frames from the optical data unit frame; and
obtaining, through demapping, the service data from the plurality of OSU frames.

For another example, the obtaining, through parsing, service data from the one or more OTN service transmission frames specifically includes: performing FEC decoding on the one or more OTN service transmission frames, to obtain the optical data unit (ODU) frame, where the optical data unit frame is configured to carry the plurality of OSU frames; obtaining, through demapping, the plurality of OSU frames from the optical data unit frame; and obtaining, through demapping, the service data from the plurality of OSU frames. The ODU frame may be specifically any one of the foregoing two structures. Details are not described herein again.

It should be understood that the method in the first aspect is a transmission method, and the method in the present invention is a corresponding method on a receive side. Therefore, unless otherwise specified, inverse processing may be alternatively performed on the receive side correspondingly for some steps of specific implementations on the transmit side. For example, if an 8B/10B encoding operation is performed on the transmit side, correspondingly, an 8B/10B decoding operation is performed at a receive side. For another example, if the frame alignment signal information is added on the transmit side, the frame alignment signal information needs to be identified at the receive side, to determine a start location of a related data frame, and then the corresponding frame alignment signal information is deleted, to obtain a data frame. Specially, if the transmit side compresses the data frame in a manner of deleting padding information, the receive side may not need to add the padding information back to the data frame.

According to a fourth aspect, an embodiment of this application provides a service processing apparatus.

The apparatus includes a memory and a processor. The memory is configured to store a computer program, and the processor is configured to perform the following method:
receiving one or more optical transport network (OTN) service transmission frames sent by an X Gigabit Ethernet transmission module, where a rate of the one or more OTN service transmission frames is 1.25 gigabits per second (Gbps) or 10.3125 Gbps, a rate of the X Gigabit Ethernet transmission module matches the rate of the one or more OTN service transmission frames, and X is equal to 1 or 10; and obtaining, through parsing, service data from the one or more OTN service transmission frames.

For possible specific implementations in the foregoing steps, refer to the descriptions of the specific implementations of the third aspect. Details are not described herein again. It should be understood that the service processing apparatus may be specifically a chip or a chipset that includes a plurality of chips.

According to a fifth aspect, an embodiment of this application provides a device. The device includes the service processing apparatus and the X Gigabit Ethernet transmission module according to any one of the fourth aspect or the specific implementations of the fourth aspect.

According to a sixth aspect, an embodiment of this application provides a system. The system includes the device according to any specific implementation of the third aspect and the device according to any specific implementation of the fifth aspect. The former device sends an OTN service transmission frame to the latter device.

In a possible implementation, an OSU frame is used as an OTN service transmission frame. For example, the former device is a client device, and the latter device is an OTN device connected to the client device. The OTN device does not need to obtain, through parsing, service data, and the OSU frame may be used as a processing object for switch processing, thereby simplifying an end-to-end service processing procedure.

### BRIEF DESCRIPTION OF DRAWINGS

FIG. 1 is a schematic diagram of a low-rate service processing procedure in the conventional technology;
FIG. 2 is a schematic diagram of an application scenario to which this application is applicable;
FIG. 3 is a schematic diagram of a structure of optical transport equipment;
FIG. 4a is a schematic flowchart of a service carrying method according to this application;
FIG. 4b is a schematic diagram of a mapping layer of service data corresponding to an embodiment shown in FIG. 4a;
FIG. 5 is a schematic flowchart of a first service carrying method according to an embodiment of this application;
FIG. 6 is a schematic diagram of a structure of an optical service unit frame according to an embodiment shown in FIG. 5;
FIG. 7a is a schematic diagram of a structure of a data frame including frame alignment signal information according to an embodiment shown in FIG. 5;
FIG. 7b is a schematic diagram of a structure of another data frame including frame alignment signal information according to an embodiment shown in FIG. 5;
FIG. 8 is a schematic diagram of a compressed data frame according to an embodiment shown in FIG. 5;
FIG. 9 is a schematic flowchart of a second service carrying method according to an embodiment of this application;
FIG. 10a is a schematic diagram of an optical data unit frame including frame alignment signal information according to an embodiment shown in FIG. 9;
FIG. 10b is a schematic diagram of another optical data unit frame including FEC information according to an embodiment shown in FIG. 9;
FIG. 11a is a schematic diagram of an OTN service transmission frame according to an embodiment shown in FIG. 9;
FIG. 11b is a schematic diagram of another OTN service transmission frame according to an embodiment shown in FIG. 9;
FIG. 12A and FIG. 12B are a schematic flowchart of a third service carrying method according to an embodiment of this application;
FIG. 13 is a schematic diagram of a structure of a service processing chip according to an embodiment of this application;
FIG. 14 is a schematic diagram of a structure of an Ethernet optical module according to an embodiment of this application; and
FIG. 15 is a schematic diagram of a structure of client equipment according to an embodiment of this application.

### DESCRIPTION OF EMBODIMENTS

A device form and a service scenario that are described in embodiments of this application are intended to describe technical solutions in embodiments of the present invention more clearly, and do not constitute any limitation on the technical solutions provided in embodiments of the present invention. A person of ordinary skill in the art may learn that, as the device form evolves and a new service scenario appears, the technical solutions provided in embodiments of this application are also applicable to resolving a similar technical problem.

FIG. 2 is a schematic diagram of an application scenario to which this application is applicable. As shown in FIG. 2, the application scenario includes an optical transport network (Optical Transport Network, OTN) and a plurality of client equipments (for example, client equipments 1 to 6 shown in FIG. 2). The OTN includes a plurality of interconnected OTN devices (for example, OTN devices 1 to 4 shown in FIG. 2). FIG. 2 shows only the OTN devices configured to connect to client devices. In actual application, the OTN may further include more devices. In addition, FIG. 2 does not show a specific connection relationship between the OTN devices. It should be understood that the OTN devices in the OTN network are connected by using an optical fiber, and may form different topology types such as a linear topology, a ring topology, and a mesh topology according to a specific requirement.

It should be noted that the client equipment may also be referred to as customer premise equipment (Customer Premise Equipment, CPE).

One OTN device may have different functions. Generally, OTN devices are classified into an optical-layer device, an electrical-layer device, and an optical/electrical hybrid device. The optical-layer device is a device that can process an optical-layer signal, for example, an optical amplifier (optical amplifier, OA) or an optical add-drop multiplexer (optical add-drop multiplexer, OADM). The OA may also be referred to as an optical line amplifier (optical line amplifier, OLA), and is mainly configured to amplify an optical signal, to support a longer transmission distance while specific performance of the optical signal is ensured. The OADM is configured to perform spatial transformation on an optical signal, so that the optical signal may be output from different output ports (which are also referred to as directions sometimes). The OADMs may be classified into a fixed OADM (fixed OADM, FOADM), a reconfigurable OADM (reconfigurable OADM, ROADM), or the like based on different capabilities. The electrical-layer device is a device that can process an electrical-layer signal, for example, a device that can process an OTN electrical signal. The optical/electrical hybrid device is a device that can process an optical-layer signal and an electrical-layer signal. It should be noted that, one OTN device may integrate a plurality of different functions based on a specific integration requirement. The technical solutions provided in this application are applicable to OTN devices of different forms and integration degrees, and are particularly applicable to the OTN device configured to connect to the client device.

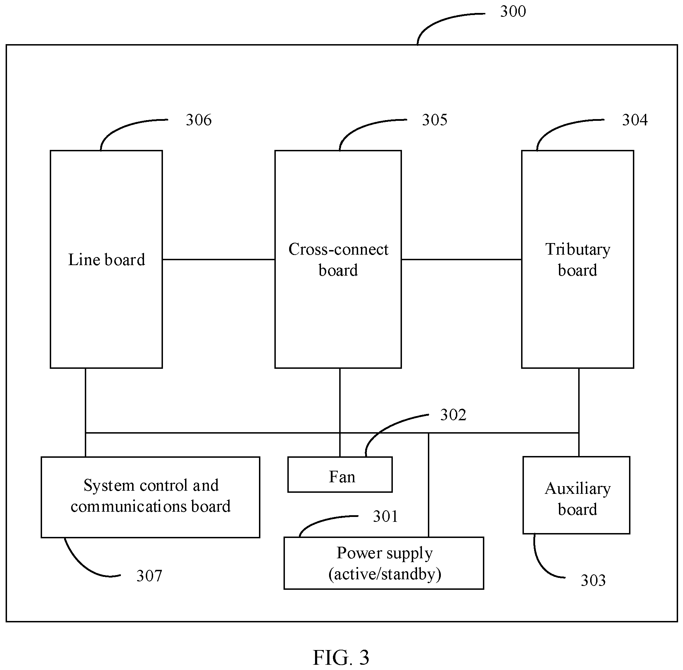

FIG. 3 is a schematic diagram of a structure of optical transport equipment, for example, an OTN device 1 in FIG. 2. Specifically, an OTN device 300 includes a power supply 301, a fan 302, and an auxiliary board 303, and may further include a tributary board 304, a line board 306, a cross-connect board 305, an optical-layer processing board (not shown in FIG. 3), and a system control and communications board 307.

It should be noted that types and quantities of boards that are specifically included in each device may vary based on a specific requirement. For example, a network device serving as a core node may not have the tributary board 304. A network device serving as an edge node may have a plurality of tributary boards 304. The power supply 301 is configured to supply power to the OTN device 300, and may include an active power supply and a standby power supply. The fan 302 is configured to dissipate heat generated by the device. The auxiliary board 303 is configured to provide an auxiliary function, for example, provide an external alarm or access an external clock. The tributary board 304, the cross-connect board 305, and the line board 306 are mainly configured to process an electrical-layer signal of the OTN. The tributary board 304 is configured to receive and send various client services such as an SDH service, a packet service, an Ethernet service, and a fronthaul service. Further, the tributary board 304 may be divided into a client-side optical module and a signal processor. The client-side optical module may be an optical transceiver, and is configured to receive and/or send service data. The signal processor is configured to map service data into a data frame and demap the data frame to obtain the service data. The cross-connect board 305 is configured to implement exchange of data frames, and complete exchange of one or more types of data frames. The line board 306 mainly processes a data frame on a line side. Specifically, the line board 306 may include a line-side optical module and a signal processor. The line-side optical module may be a line-side optical transceiver, and is configured to receive and/or send a data frame. The signal processor is configured to multiplex and demultiplex a data frame on the line side, or map and demap a data frame. The system control and communications board 307 is configured to implement system control and communication. Specifically, information may be collected from different boards through a backplane, or control instructions are sent to a corresponding board through a backplane. It should be noted that, unless otherwise specified, there may be one or more specific components (for example, signal processors). This is not limited in this application. It should be further noted that, types of boards included in the device and function designs and quantities of the boards are not limited in embodiments of this application.

In the conventional technology, when a low-rate service is carried, multi-layer mapping needs to be performed, to complete service data transmission by using an existing high-rate OTU interface frame. A high rate is a transmission rate of at least 2.5 Gbps. In this way, a processing procedure is complex, bandwidth utilization is low, and a processing delay is long. A relatively direct manner is to introduce a data frame with a lower rate into the OTN, for example, introduce a rate-matched low-rate data frame for an E1 signal. A plurality of low-rate data frames are then mapped to an ODUO or another existing ODU container for transmission. This may simplify the procedure to some extent and improve the bandwidth utilization, but two problems still exist. A first problem is that an OTU1 that is supported by the OTN and has a line interface rate of 2.5 Gbps needs to process a plurality of lower-rate data frames together, and consequently, a relatively long processing delay still exists. Another problem is that supporting a relatively large quantity of data frame processing layers greatly increases costs of the OTN device.

Therefore, this application provides a new service carrying method, to reduce service processing complexity and reduce costs of the OTN device. Compared with the foregoing alternative method that may be figured out by a person skilled in the art, according to the method provided in this application, a data frame that may be used for a client device interface and an interface through which the OTN device connects to the client device interface is newly defined, so as to effectively reduce the device costs.

It should be noted that unless otherwise specified, the value of the rate of the data frame mentioned in this application may change within a particular range. Therefore, if a rate of a data frame is a value that varies within a predetermined range on a fixed rate, it may be briefly described as follows: the rate of the data frame is the fixed rate. For example, a rate of a data frame is (1.25 Gbps (1 - 100 ppm), 1.25 Gbps (1 + 100 ppm)), which may be described as that the rate of the data frame is 1.25 Gbps. (1.25 Gbps (1 - 100 ppm), 1.25 Gbps (1 + 100 ppm)) may also be simply written into 1.25 Gbps ± 100 ppm, where ppm represents a part per million (part per million). It should be further noted that the rate of the data frame mentioned in this application is a bit rate of the data frame. A value of bandwidth that is provided by a transmission channel corresponding to the data frame is equal to the value of the bit rate of the data frame. For example, if the rate of the data frame is 1.25 Gbps, the bandwidth that is provided by a transmission channel corresponding to the data frame is 1.25 G.

In different embodiments, the data frame may be specifically an OTN service transmission frame, an optical service unit frame, an optical data unit frame, or a frame that is output after these frames are processed. For details, refer to descriptions in subsequent embodiments. Details are not described herein.

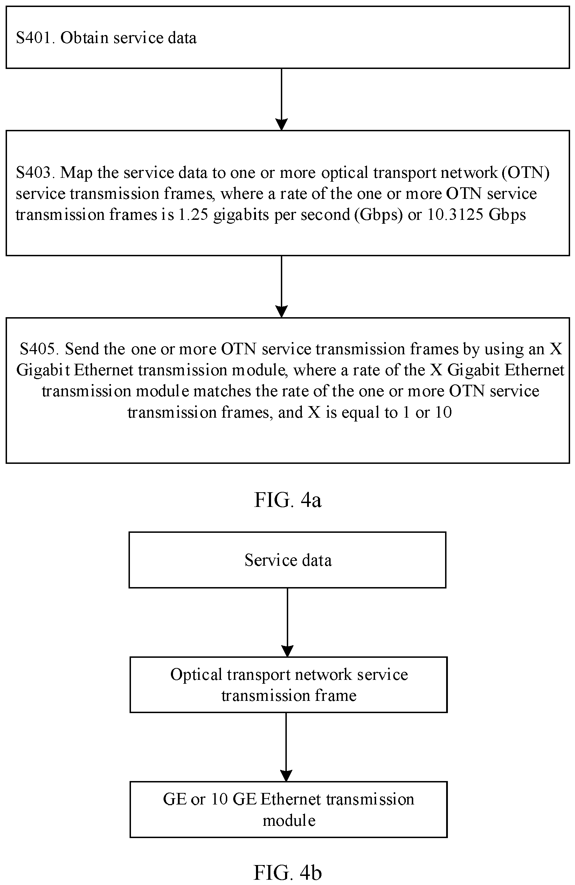

FIG. 4a is a schematic flowchart of a service carrying method according to this application. As shown in FIG. 4a, the method includes the following three steps:
S401: Obtain service data.

Specifically, the service data may be generated by a device itself, or sent by another device. For example, a client device 1 shown in FIG. 2 generates the service data. Alternatively, as shown in FIG. 2, an OTU1 frame that is sent by an OTN device 1 and received by an OTN device 3 includes the service data.

S403: Map the service data to one or more OTN service transmission frames, where a rate of the one or more OTN service transmission frames is 1.25 gigabits per second (Gbps) or 10.3125 Gbps.

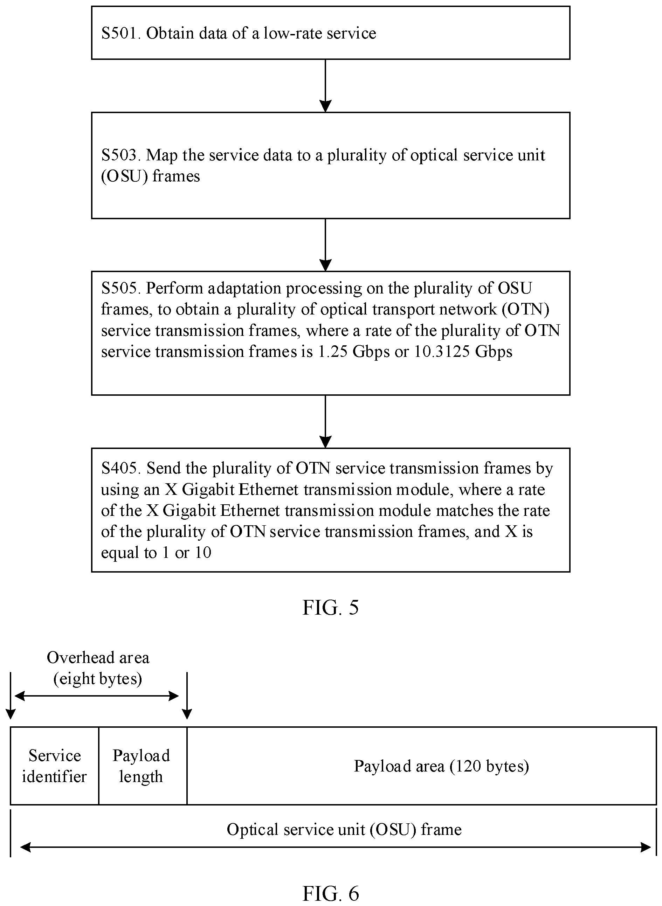

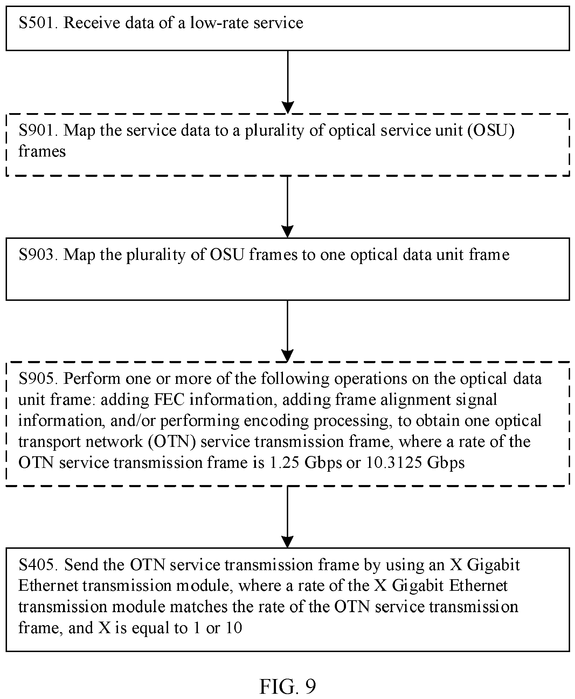

The OTN service transmission frame is a newly defined data frame, and may also be referred to as an optical service transmission frame. The OTN service transmission frame has a plurality of implementations. For details, refer to a plurality of specific instances provided in embodiments in FIG. 5 and FIG. 9. Details are not described herein again.

S405: Send the one or more OTN service transmission frames by using an X Gigabit Ethernet transmission module, where a rate of the X Gigabit Ethernet transmission module matches the rate of the one or more OTN service transmission frames, and X is equal to 1 or 10.

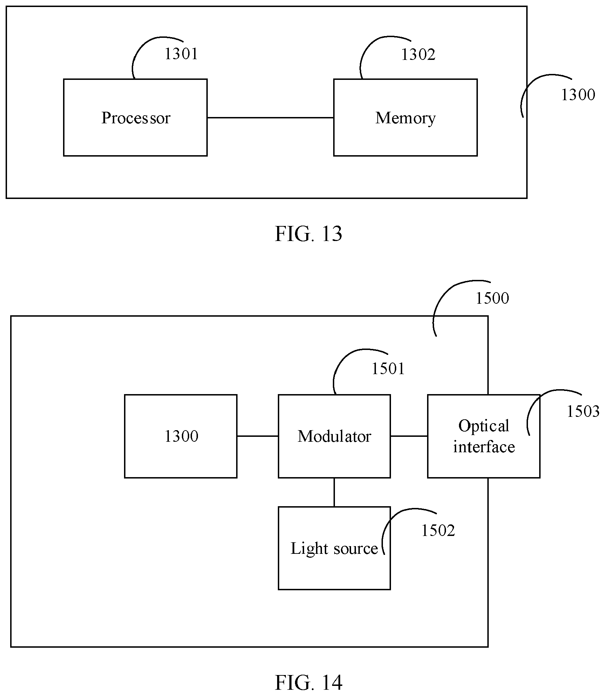

When X = 1, the X Gigabit Ethernet transmission module is a GE transmission module. Specifically, the GE transmission module may be a twisted pair or a GE optical transceiver module (the latter may also be referred to as an optical module for short). When X = 10, the X Gigabit Ethernet transmission module is a 10 GE optical module. The GE transmission module and the 10 GE optical module may be existing commercial modules. Alternatively, the GE transmission module and the 10 GE optical module may be transmission modules that support a service carrying method in this application and that are shown in FIG. 14. An Ethernet transmission module may also be referred to as an Ethernet physical interface. Similarly, the Ethernet optical module is also referred to as an Ethernet optical interface; the twisted pair may also be referred to as an Ethernet electrical interface.

It should be noted that rate matching means that a difference between the rate of the OTN service transmission frame and the rate of the X Gigabit Ethernet transmission module is within a predetermined range, for example, 100 ppm or a smaller range.

FIG. 4b is a schematic diagram of a processing layer of the service data. Specifically, the service data is first mapped to the OTN service transmission frame and then transmitted by using the GE or 10 GE transmission module. By newly defining a data frame that is used cooperatively with an existing low-cost X Gigabit Ethernet transmission module, that is, defining a low-rate interface data frame, the technical solutions disclosed in this application may simplify service carrying complexity and effectively reduce device costs.

It should be noted that the terms "first", "second", and the like in this application are intended to distinguish between similar objects but do not necessarily indicate a specific order or sequence. It should be understood that the data termed in such a way is interchangeable in a proper circumstance so that embodiments described herein can be implemented in an order not described in this application. The term "and/or" is used to describe an association relationship between associated objects and represents that three relationships may exist. For example, A and/or B may represent the following cases: Only A exists, both A and B exist, and only B exists. A specific operation method in a method embodiment may also be applied to an apparatus embodiment. On the contrary, function descriptions of a component in the apparatus embodiment are also applicable to related descriptions in the method embodiment.

It should be further noted that unless otherwise specified, descriptions of a technical feature in one embodiment may also be used to explain a corresponding technical feature mentioned in another embodiment. For example, specific descriptions of the Ethernet transmission module in the embodiment is applicable to the Ethernet transmission module in the another embodiment. For another example, a specific field included in frame alignment signal information and a specific implementation of adding the frame alignment signal information in the embodiment is applicable to the frame alignment signal information and steps of adding the frame alignment signal information mentioned in the another embodiment.

The following further describes the technical solutions of this application based on some common aspects of this application described above.

FIG. 5 is a schematic flowchart of a first service carrying method according to an embodiment of this application. This embodiment is described by using a client device as an example. As shown in FIG. 5, the method includes the following steps.

S501: Obtain data of a low-rate service.

Specifically, the client device 1 obtains data of low-rate services, for example, low-rate SDH services (such as a virtual container (Virtual Container, VC) 12, a VC3, and a VC4), low-rate E1, E3, and E4 plesiochronous digital hierarchy (Plesiochronous Digital Hierarchy, PDH) services, low-rate Ethernet services, industrial Internet of things services, and emerging services. The emerging services may include, for example, a video, VR (Virtual Reality), and AR (Augmented Reality).

S503: Map the service data to a plurality of optical service unit (OSU) frames.

FIG. 6 is a schematic diagram of a structure of an OSU frame. As shown in FIG. 6, the OSU frame includes an overhead area and a payload area. The overhead area is used to carry overhead information, for example, a service identifier and information about a service data length (which is identified as a payload length in FIG. 6) carried in the payload area. The payload area is used to carry the low-rate service. Generally, a size of the OSU frame is an integer multiple of 16 bytes (Byte, B for short). To simplify device processing, a fixed-length OSU frame is generally defined. A length of the OSU frame shown in FIG. 6 is 128 bytes, that is, 16 B ^{∗} 8. Different low-rate services may correspond to different amounts of data. One piece of the service data may be carried in one OSU frame. Alternatively, one piece of the service data needs to be split and mapped to the plurality of OSU frames. It should be noted that the OSU frame is also referred to as an optical service data unit (optical service data unit, OSDU) frame.

Optionally, the payload area of the OSU frame may include padding information. For example, when the piece of the service data or some of the service data does not fully occupy the payload area of the OSU frame, the padding information may be filled. For another example, because an occupation proportion or a size of the payload area is preset, the padding information may be written into a part that cannot carry the service data.

S505: Perform adaptation processing on the plurality of OSU frames, to obtain a plurality of OTN service transmission frames, where a rate of the plurality of OTN service transmission frames is 1.25 Gbps or 10.3125 Gbps.

In a specific implementation, the adaptation processing is adding frame alignment signal information. There are a plurality of specific manners of adding the frame alignment signal information, which are described separately below.

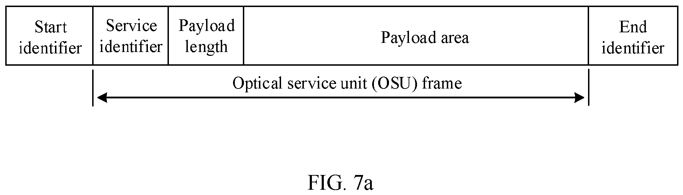

FIG. 7a is a schematic diagram of a structure of a data frame including frame alignment signal information. The data frame shown in FIG. 7a includes the OSU frame, a frame start identifier, and a frame end identifier. For example, the frame start identifier and the frame end identifier may respectively use control encoding K27.7 and K29.7 that are used in the 8B/10B encoding scheme. For another example, the frame start identifier and the frame end identifier may also use another character. For example, a start character and an end character that are defined in the 64B/66B encoding may be used. Alternatively, another customized special character may be used to indicate a start or an end of the OSU frame.

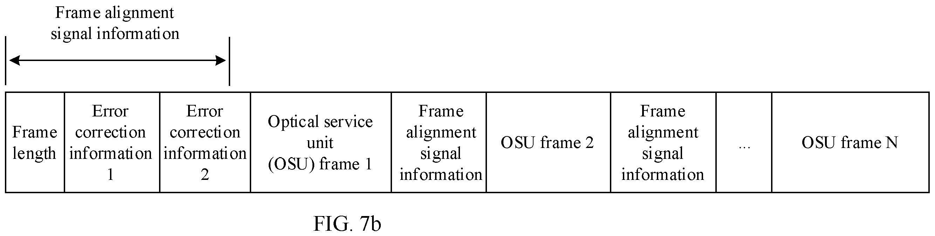

FIG. 7b is a schematic diagram of a structure of another data frame including frame alignment signal information. The data frame shown in FIG. 7b includes a plurality of OSU frames and frame alignment signal information before each OSU frame. The frame alignment signal information is used to determine a start location of the OSU frame, to parse data. For example, the frame alignment signal information may include a frame length field, a plurality of pieces of error correction information (error correction information 1 and error correction information 2 shown in FIG. 7b). In FIG. 7b, the error correction information 1 is used to implement single-bit error correction on the frame length field, and may also be referred to as an error correction code (Error Correction Code, ECC). The frame length field is used to indicate a frame length of the OSU frame. The error correction information 2 is used to implement error correction on the frame length field and the error correction information 1. Specifically, a cyclic redundancy check (cyclic redundancy check, CRC) may be used for implementation. A length of the frame alignment signal information may be two bytes, three bytes, or the like. In an example shown in FIG. 7b, if the length of the frame alignment signal information is 2 B, the frame length field occupies 1 B, the error correction information 1 occupies five bits, and the error correction information 2 occupies three bits (that is, uses CRC3). Specifically, the error correction information (the error correction information 1 and/or the error correction information 2) may change with a frame length. If the OSU frame does not change, a value of the error correction information does not change. Therefore, a receive side device may determine the start location of the OSU frame by identifying unchanged information such as the frame length information and the matched error correction information from a received data stream. Similarly, if the frame length changes, then correspondingly, error correction information X changes regularly. In this way, the start location of the OSU frame in one data stream may also be identified by using the frame length information and the matched error correction information. It should be noted that the error correction information 1 is optional. Frame alignment may be alternatively completed by using one piece of error correction information together with the frame length information.

Optionally, an adaptation operation may further include an encoding operation. Specifically, the encoding operation may be 8B/10B encoding, 64B/66B encoding, or another encoding scheme, to improve reliability of data transmission. When the frame start identifier and the frame end identifier respectively use the K27.7 and the K29.7, and the encoding scheme is the 8B/10B encoding, an existing Ethernet physical layer processing module may be reused to reduce device costs.

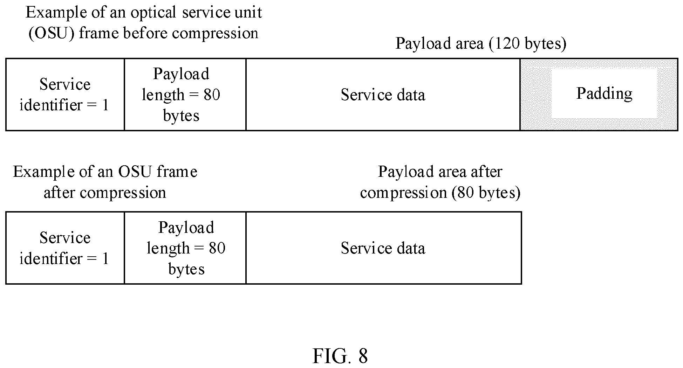

Optionally, the adaptation operation may further include data compression. The data compression is intended for a scenario in which the payload area includes the padding information. FIG. 8 is a schematic diagram of a compressed data frame according to an embodiment shown in FIG. 5. As shown in FIG. 8, a length of the payload area of the OSU frame before compression is 120 bytes, and a length of the OSU frame after padding deletion (that is, the data compression) is 80 bytes. Therefore, during transmission of one piece of the service data, it is possible that both an uncompressed OSU frame and a compressed OSU frame exist (this may also be referred to as a hybrid transmission manner for short). The plurality of OTN service transmission frames obtained through data compression include only valid service data and a necessary overhead, thereby improving network bandwidth utilization and reducing a service processing delay.

Optionally, the adaptation operation may further include a scrambling operation to suppress a long consecutive sequence of "0s" and a long consecutive sequence of "Is" in a line code, helping extract a clock signal from a line signal. For example, a self-synchronous scrambling manner or a frame-synchronous scrambling manner may be used.

It should be noted that when the adaptation operation includes a plurality of specific actions, a sequence of the specific actions may be changed. For example, the compression may be performed first, and then the frame alignment signal information is added. Alternatively, the frame alignment signal information may be added first, and then the compression is performed.

In this embodiment, the OTN service transmission frame may be an OSU frame that includes the frame alignment signal information, an OSU frame that includes the frame alignment signal information and is subject to the 8B/10B encoding, or an OSU frame that includes the frame alignment signal information and is compressed. Regardless of which specific operation mentioned above is performed, a rate of an output OTN service transmission frame is 1.25 Gbps or 10.3125 Gbps. The OTN service transmission frame may be referred to as an enhanced OSU (enhanced OSU, OSUe) frame.

An example in which a length of the OSU frame is 128 bytes (a specific frame structure is shown in FIG. 6) and the rate of the OTN service transmission frame is 1.25 Gbps is used to describe a rate of the service data that may be carried in the OTN service transmission frame. In this example, it is assumed that the frame start identifier and the frame end identifier are added to the OSU frame, and therefore the length of the OSU frame increases by two bytes. Then 8B/10B encoding is performed on the OSU frame to obtain the OTN service transmission frame. Therefore, a maximum payload rate of the OTN service transmission frame that is used to carry the service data is 1.25 Gbps ^{∗} 120/(128 + 2) ^{∗} 80% = 0.923 Gbps, where 120 represents a size of the payload area; 80% represents a percentage of valid data after the 8B/10B encoding. That is, bandwidth that may be occupied by the service data is 0.923 G.

Further, an E1 service is used as an example to describe technical advantages that are brought by compression of the OTN service data frame. If a 128-byte OSU frame is used for carrying, service loading time is equal to time for an E1 service to accumulate the size of the payload area in the OSU frame (for example, 120 bytes shown in FIG. 6), that is, 120 ^{∗} 8/2.048 = 468.75 microseconds (µs), and the delay is relatively long, where 2.048 represents an E1 rate. If only 30 bytes in the payload area are limited to be used to carry the service data, and the OSU frame that carrys the service data is compressed and then transmitted, E1 loading time is 30 ^{∗} 8/2.048 = 117.1875 µs, which is only a quarter of original time. It can be learned that, compressing the OSU frame may reduce a processing delay for specific service carrying.

In addition to the foregoing reduction in delay caused by processing a service itself, when a plurality of pieces of low-rate service data are to be processed at the same time, the compression of the OTN service transmission frame may also reduce waiting duration for other concurrent service data. It is assumed that an interface with 1.25 G bandwidth may carry a maximum of 112 E1 services at the same time. For example, one device receives the 112 E1 services at the same time, and the longest waiting time is transmission time of 111 E1 services, that is, 111 ^{∗} 130 ^{∗} 8 (bit)/1.25 (Gbps) = 92.352 µs. If the OSU frame is compressed, a waiting delay for other service data is greatly reduced, that is, 111 ^{∗} 40 ^{∗} 8 (bit)/1.25 (Gbps) = 28.416 µs.

S405: Send the plurality of service transmission frames by using an X Gigabit Ethernet transmission module, where a rate of the X Gigabit Ethernet transmission module matches the rate of the plurality of service transmission frames, and X is equal to 1 or 10.

For details, refer to the descriptions of S405 in FIG. 4a. Details are not described herein again. It should be noted that the service transmission frame needs to use the 8B/10B encoding, so that the data transmission can be performed by using a twisted pair.

By newly defining one OSU frame and performing adaptation processing on the OSU frame, to implement rate matching with an existing low-cost X Gigabit Ethernet transmission module, the technical solutions disclosed in this application may simplify processing complexity of the service carrying and reduce the device costs.

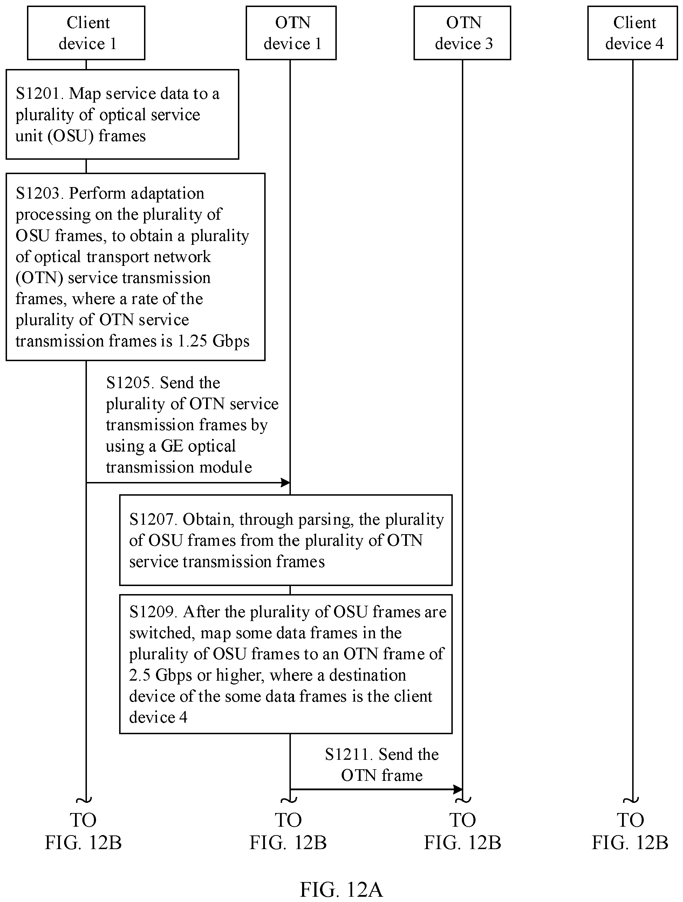

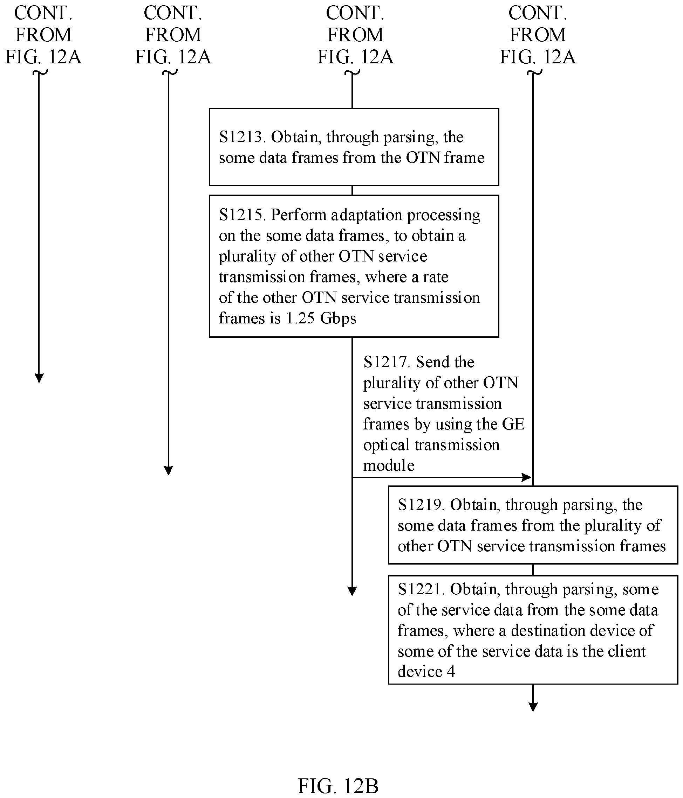

FIG. 9 is a schematic flowchart of a second service carrying method according to an embodiment of this application. In this embodiment, a client device is used as an example for description. As shown in FIG. 9, the method includes the following steps.
S501: Receive data of a low-rate service.
For details, refer to the descriptions of S501 in FIG. 5. Details are not described herein again.
S901: Map the service data to a plurality of optical service unit (OSU) frames.
S901 is the same as step S503 in FIG. 5. For specific descriptions of this step and the OSU frame, refer to the descriptions of step S503 in FIG. 5. Details are not described herein again. A difference is that, in this embodiment, S901 is an optional step. If the method in this embodiment does not include S901, the service data is directly mapped to an ODU frame in step S903. An advantage of introducing the OSU frame is that the OSU frame can better match a rate requirement of the low-rate service. In an OTN, a switch operation at a granularity of the OSU frame may be introduced to improve flexibility of end-to-end service processing. For details, refer to the embodiment in FIG. 12A and FIG. 12B. Details are not described herein.
S903: Map the plurality of OSU frames to one optical data unit frame.
S905: Perform one or more of the following operations on the optical data unit frame: adding FEC information, adding frame alignment signal information, and/or performing encoding processing, to obtain one OTN service transmission frame, where a rate of the OTN service transmission frame is 1.25 Gbps or 10.3125 Gbps.

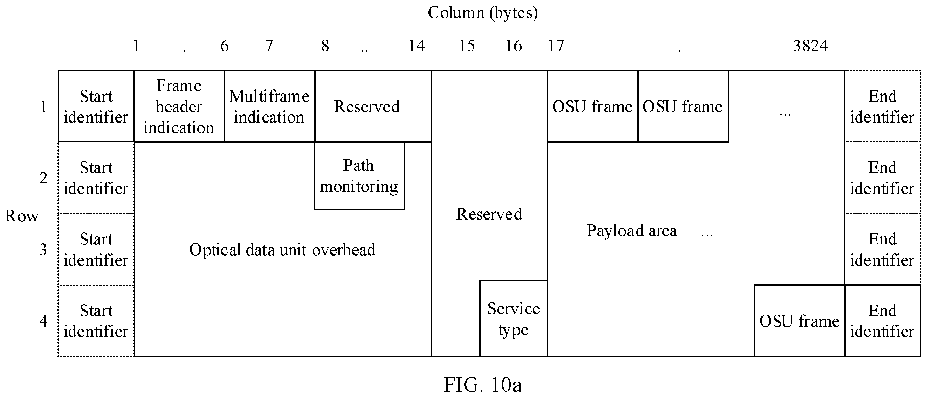

FIG. 10a is a schematic diagram of an optical data unit frame including frame alignment signal information. As shown in FIG. 10a, the optical data unit frame is of a structure with four rows and 3824-byte columns. Columns 1 to 16 of the optical data unit frame are an overhead area, which includes a frame header indication, a multiframe indication, a path monitoring overhead, a payload type overhead, and other parts that are reserved fields; and columns 17 to 3824 are a payload area, which is used to carry the plurality of OSU frames. The frame header indication is used to indicate a start location of the optical data unit frame. The multiframe indication is used to indicate a specific number of the current optical data unit frame in a plurality of consecutive optical data unit frames. The path monitoring overhead is used to monitor path quality, that is, transmit quality information of a transmission path of the optical data unit frame. Specifically, the path monitoring overhead may include one or more pieces of the following information: trail trace information (Trail trace Identifier, TTI), bit parity-8 (Bit Interleaved Parity-8, BIP-8), a backward error indication (Backward Error Indication, BEI), a backward defect indication (Backward Defect Indication, BDI), and a status information (Status information, STAT) overhead. The payload type (payload type, PT) overhead is used to indicate a mapping manner in which a service carried in the optical data unit frame is mapped to the optical data unit frame. The PT overhead may also be referred to as a service mapping type. Specifically, a PT may be preset to be a specific value, for example, 0x25, to indicate that the optical data unit frame carrys the OSU frame.

It should be noted that, the reserved fields in columns 1 to 16 of the optical data unit frame may be alternatively used to carry the OSU frame, to improve bandwidth utilization of the optical service unit frame. In this way, the foregoing optical data unit frame includes only the foregoing overhead (as shown in FIG. 10a). In addition, FIG. 10a shows merely an example for a specific overhead location, which may be alternatively replaced with another arrangement manner. For example, the plurality of overheads described above are placed from a first row, and occupy several consecutive columns. A remaining location is used as the payload area. This may simplify parsing of a data frame.

FIG. 10a shows a specific example of adding the frame alignment signal information to the optical data unit frame. As shown in FIG. 10a, the frame alignment signal information is added before the first byte and after the last byte in each row of the data frame; alternatively, in a unit of the entire optical data unit frame, the frame alignment signal information is added before the first byte or after the last byte of the frame. For descriptions of the frame alignment signal information, refer to the descriptions of FIG. 7a and FIG. 7b. Details are not described herein again.

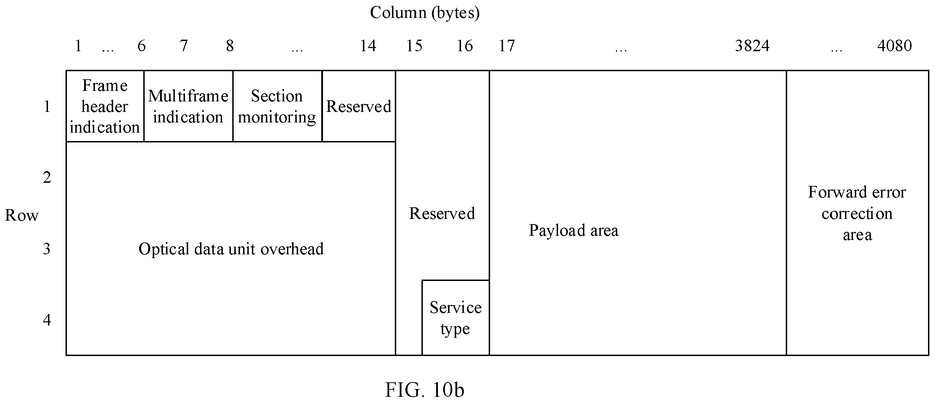

FIG. 10b is a schematic diagram of another optical data unit frame including FEC information. As shown in FIG. 10b, a forward error correction (Forward Error Correction, FEC) area is added to a structure of the optical data unit frame, and a size of the forward error correction area is four rows and 256-byte columns (that is, columns 3825 to 4080 shown in FIG. 10b). The FEC area is used to correct a bit error that occurs during transmission of the optical data unit frame. Optionally, as shown in FIG. 10b, the optical data unit frame may further include a section monitoring (Section Monitoring, SM) overhead, and SM is used for link monitoring. Information included in the SM is the same as the foregoing descriptions about path monitoring information. Details are not described herein again.

Optionally, encoding processing may be further performed on the optical data unit frame, to obtain the OTN service transmission frame.

It should be noted that FIG. 10b shows only a manner of adding FEC information. Alternatively, the FEC information may be inserted in another manner. For example, 16 columns of the FEC information may be inserted between every 239 columns. For another example, 32 columns of the FEC information may be inserted between every 478 columns. In this way, an advantage is that the OTN service transmission frame may be flexibly constructed based on an FEC symbol size, thereby reducing an encoding/decoding processing delay of the FEC, and further reducing an overall frame processing delay.

It should be noted that, a manner of mapping the OSU frame to the optical data unit frame described in FIG. 10a and FIG. 10b is merely an example. In a specific application, a payload area of the optical data unit frame may be divided into a plurality of payload blocks. A plurality of preset consecutive payload blocks are used as one transmission period. When the OSU frame is mapped to the data unit frame, some or all of the payload blocks in one transmission period are occupied. One OSU frame may be placed in one or more payload blocks. This is not limited in this application.

In this embodiment, the OTN service transmission frame may be an optical data unit frame that includes the frame alignment signal information, an optical data unit frame that includes the frame alignment signal information and is subject to 8B/10B encoding, or an optical data unit frame that includes the frame alignment signal information and the FEC information. Regardless of which specific operation mentioned above is performed, a rate of an output OTN service transmission frame is 1.25 Gbps or 10.3125 Gbps.

When the rate of the OTN service transmission frame is 1.25 Gbps, the OTN service transmission frame may also be referred to as an under-clocked optical data unit 0 frame (under-clocked optical data unit 0, ODU0u), an over-clocked optical data unit 0 frame (over-clocked optical data unit 0, ODU0o), an enhanced optical data unit 0 frame (ODU0e), or an Ethernet optical data unit frame. Alternatively, if an ODU0e includes the FEC information, the ODU0e may also be referred to as an optical transport unit 0 frame (under-clocked optical transport unit 0, OTU0u), an over-clocked optical transport unit 0 frame (over-clocked optical transport unit 0, OTU0o), an enhanced optical transport unit 0 frame (OTUOe), or an Ethernet optical transport unit frame.

It should be noted that the ODUO is a transmission container that is defined in an existing OTN standard, and a rate of the ODUO is 1.24416 Gbps, and therefore the ODUO cannot be used as an interface transmission container. To be specific, the ODUO needs to be mapped to a higher-order OTU frame (for example, an OTU1) before being transmitted between devices. However, the ODU0e or the OTU0e provided in this embodiment may be directly sent from one device to another device by using an Ethernet transmission module, to implement service data transmission with relatively low device costs.

When the rate of the OTN service transmission frame is 10.3125 Gbps, the OTN service transmission frame may also be referred to as an under-clocked optical data unit 2 frame (under-clocked optical data unit 2, ODU2u) or an over-clocked optical data unit 2 frame (over-clocked optical data unit 2, ODU2o). Alternatively, if an ODU2u includes the FEC information, the ODU2u may also be referred to as an optical transport unit 2 frame (under-clocked optical transport unit 2, OTU2u) or an over-clocked optical transport unit 2 frame (over-clocked optical transport unit 2, OTU2o).

It should be noted that the ODU2 is a transmission container defined in an existing OTN standard, and a rate of the ODU2 is 10.037273924 Gbps. The ODU2 needs to be mapped to the OTU2, and then transmitted between devices by using the OTU2 optical module. However, the ODU2u provided in this embodiment may be directly sent from one device to another device by using the Ethernet transmission module, to implement the service data transmission.

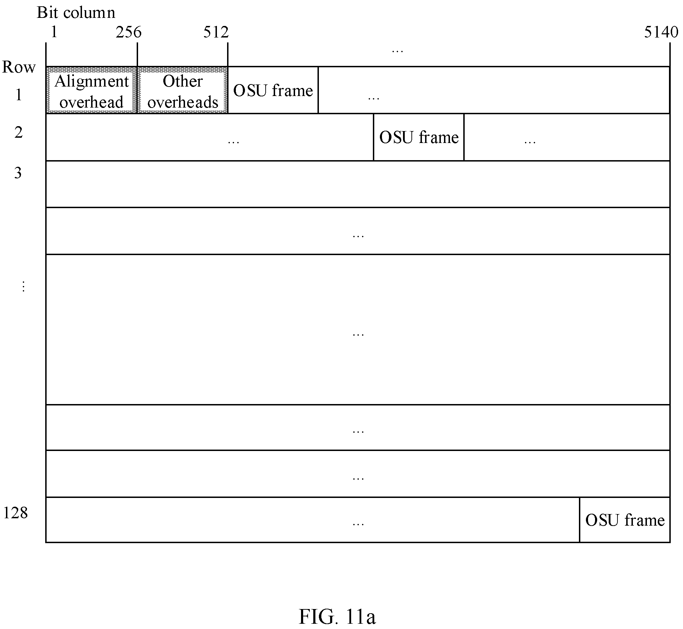

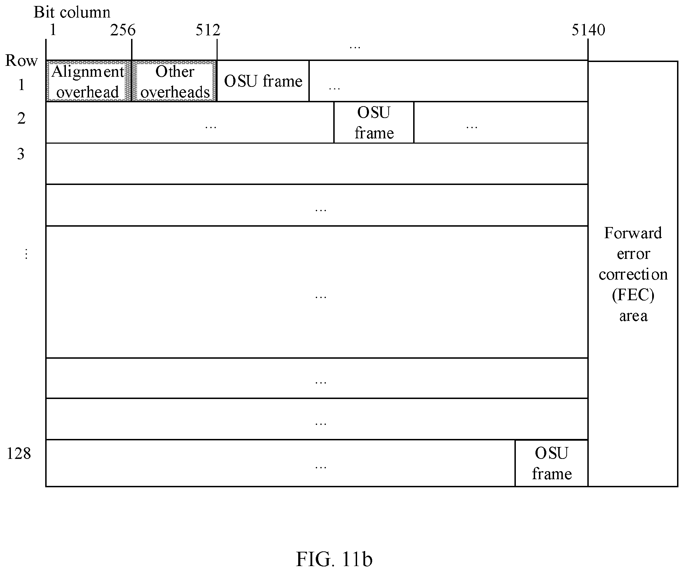

FIG. 11a and FIG. 11b are schematic diagrams of structures of other two types of OTN service transmission frames. A difference between the other two types of OTN service transmission frames lies in that an OTN service transmission frame shown in FIG. 11b includes an FEC area. Specifically, a size of the FEC area may be 140-bit columns or 300-bit columns, and an RS (528, 514) FEC encoding scheme or an RS (544,514) FEC encoding scheme is used respectively. A size of a same part in FIG. 11a and FIG. 11b is 128 rows and 5140-bit columns, and the same part includes an alignment overhead, other overheads, and a payload area that carrys the plurality of OSU frames. The other overheads may be one or more pieces of the following information: TTI, BIP-8, BEI, BDI, and STAT. A quantity of rows included in the frame may also be an integer multiple of 64, such as 256 rows, 1024 rows, or the like. This is not limited in this application.

Overhead proportions in frame structures shown in FIG. 11a and FIG. 11b are relatively small. When the frame structures are used as the OTN service transmission frames, a relatively high payload area transmission rate may be obtained, thereby improving bandwidth utilization.

Optionally, the frame alignment signal information may also be added to the OTN service transmission frames shown in FIG. 11a and FIG. 11b. Specifically, the frame alignment signal information may be added to the other overheads, or in a manner shown in FIG. 10a. Optionally, the OTN service transmission frames shown in FIG. 11a and FIG. 11b may also be encoded. If these optional operations are performed, an OTN service transmission frame in the next step is a data frame obtained after these operations are performed.

S405: Send the OTN service transmission frame by using an X Gigabit Ethernet transmission module, where a rate of the X Gigabit Ethernet transmission module matches the rate of the OTN service transmission frame, and X is equal to 1 or 10.

For details, refer to the descriptions of S405 in FIG. 4a. Details are not described herein again.

By defining a plurality of new OTN service transmission frames, to implement rate matching with an existing low-cost X Gigabit Ethernet transmission module, the technical solutions disclosed in this application may simplify service carrying complexity and effectively reduce device costs.

FIG. 12A and FIG. 12B are a schematic flowchart of a third service carrying method according to an embodiment of this application. This embodiment is described by using an example in which service data needs to be transmitted from a client device 1 to a client device 4 through an OTN device 1 and an OTN device 3. As shown in FIG. 12A and FIG. 12B, the method includes the following steps:

The client device 1 performs the following steps:
S1201: Map the service data to a plurality of optical service unit (OSU) frames.
S1203: Perform adaptation processing on the plurality of OSU frames, to obtain a plurality of OTN service transmission frames, where a rate of the plurality of OTN service transmission frames is 1.25 Gbps.
S1205: Send the plurality of service transmission frames by using a GE optical transmission module.

The foregoing three steps are similar to step S503, step S505, and step S405 in FIG. 5. Refer to the descriptions of corresponding steps in FIG. 5. Details are not described herein again.

It should be noted that the foregoing three steps may be alternatively replaced with S901, S903, S905, and S405 shown in FIG. 9, or any specific implementation in FIG. 9.

The OTN device 1 performs the following steps:
receiving the plurality of service transmission frames (this step is not shown in FIG. 12A and FIG. 12B and subsequent receiving steps are similar. Details are not described again).

S1207: Obtain, through parsing, the plurality of OSU frames from the plurality of OTN service transmission frames.

S1209: After the plurality of OSU frames are switched, map some data frames in the plurality of OSU frames to an OTN frame of 2.5 Gbps or higher, where a destination device of the some data frames is the client device 4.

S1211: Send the OTN frame.

Specifically, the OTN device 1 parses the OTN service transmission frame to obtain the plurality of OSU frames. Specifically, the parsing may include processing such as deleting frame alignment signal information, decoding, and/or adding padding information. Alternatively, if the actions of the client device 1 are replaced with a plurality of steps in FIG. 9, the parsing may specifically include performing FEC decoding, deleting frame alignment signal information, decoding, and/or demapping. It should be understood that a processing operation performed by the OTN device 1 is an inverse operation of the client device 1. Then, the OTN device 1 performs switch processing on the plurality of OSU frames that are obtained through parsing, and maps some or all of the plurality of OSU frames to a high-rate line OTN frame (for example, a 2.5 G OTU1 frame) and sends the high-rate line OTN frame. The switch processing refers to scheduling the data frame from one port to another output port. A specific port to which the data frame is scheduled may be determined according to a destination device to which the data frame needs to be sent. In step S1209, for example, a destination device of some of the plurality of OSU frames is the client device 4. The some OSU frames are switched to a same port and sent to a next OTN device (for example, the OTN device 3 in this example).

The OTN device 3 performs the following steps:
receiving the OTN frame.

S1213: Obtain, through parsing, the some data frames from the OTN frame.

S1215: Perform adaptation processing on the some data frames, to obtain a plurality of other OTN service transmission frames, where a rate of the other OTN service transmission frames is 1.25 Gbps.

S1217: Send the plurality of other OTN service transmission frames by using the GE optical transmission module.

Specifically, the OTN device 3 obtains, through demapping, the some data frames from the OTN frame. Then, the OTN device 3 performs processing similar to steps S1203 and S1205 in this embodiment. For details, refer to related descriptions. Details are not described herein again.

The client device 4 performs the following steps:
receiving the plurality of other OTN service transmission frames.

S1219: Obtain, through parsing, the some data frames from the plurality of other OTN service transmission frames.

S1221: Obtain, through parsing, some of the service data from the some data frames, where a destination device of some of the service data is the client device 4.

By defining a plurality of new OTN service transmission frames, to implement rate matching with an existing low-cost X Gigabit Ethernet transmission module, the technical solutions disclosed in this application may simplify service carrying complexity and effectively reduce device costs. In addition, by introducing OSU frame switching, an OTN device does not need to obtain, through parsing, a plurality of pieces of service data to be sent to different destination devices, and directly uses the OSU frame for processing. The solutions disclosed in this embodiment of this application improve flexibility of end-to-end service processing.

It should be noted that FIG. 4a, FIG. 9, FIG. 12A, and FIG. 12B are described from a perspective of directly sending the OTN service transmission frame by using an Ethernet transmission module. It should be understood that the OTN service transmission frame may be alternatively an OSU frame in FIG. 4a and FIG. 9, an OSU frame on which adaptation processing is performed to some extent, or an optical data unit frame. Correspondingly, a bit rate of the OTN service transmission frame may no longer be 1.25 Gbps or 10.3125 Gbps. In some possible implementations, a bit rate of an OTN service transmission frame, to which the frame alignment signal information is added, on which encoding is performed, and/or on which compression is performed, is 1.25 Gbps or 10.3125 Gbps. For example, the OSU frame is an OTN service transmission frame. If 10B/8B encoding is performed on the OSU frame before the OSU frame is transmitted by using an Ethernet optical module, a bit rate of an 8B/10B encoded OSU frame (that is, an OTN service transmission frame subject to 8B/10B encoding) is 1.25 Gbps or 10.3125 Gbps.

FIG. 13 is a schematic diagram of a structure of a service processing chip according to an embodiment of this application. As shown in FIG. 13, a chip 1300 includes a processor 1301 and a memory 1302 connected to the processor. The memory 1302 is configured to store necessary program instructions and data that are to be executed by the processor. The processor 1301 is configured to implement a method step that is performed by a device in any one or more of the foregoing embodiments. For example, the processor 1301 is configured to: perform method steps other than step S405 in FIG. 4a, FIG. 5, or FIG. 9, and send an OTN service transmission frame to an X Gigabit Ethernet module. For another example, the processor 1301 is configured to: perform a method step by any device in FIG. 12A and FIG. 12B except sending a data frame to another device or receiving a data frame from another device, and send a generated data frame to the X Gigabit Ethernet module (such as S1205) or receive the data frame from the X Gigabit Ethernet module. For specific steps, refer to the descriptions in related drawings. Details are not described herein again.

It should be noted that client equipment and an OTN device in this application generally have both receiving and sending functions. Therefore, the processor 1301 may be configured to implement method steps of two client equipments in FIG. 12A and FIG. 12B, or be configured to implement method steps of two OTN devices, to support both the receiving and sending functions of a service. It should be further noted that the memory 1302 may not be included in the chip 1300, but is connected to the processor 1301 by using a circuit.

It should be further noted that an example shown in FIG. 13 is an implementation of a single chip. In another specific implementation, a chipset may be alternatively used. For example, two chips are used to complete a function of one chip shown in FIG. 13. Using an embodiment shown in FIG. 5 as an example, the chip completes steps S501 and S503, and another chip completes S505 and sends the OTN service transmission frame to the X Gigabit Ethernet transmission module. Specific function division of a plurality of chips is not limited in this application.

FIG. 14 is a schematic diagram of a structure of an Ethernet optical module according to an embodiment of this application. As shown in FIG. 14, an Ethernet optical module 1500 includes a chip 1300, a modulator 1501, a light source 1502, and an optical interface 1503 that are shown in FIG. 13. Both the chip 1300 and the light source 1502 are connected to the modulator 1501. The modulator 1501 is configured to: modulate a data signal output by the chip 1300 to a continuous light source output by the light source 1502, and then send the data signal by using the optical interface 1503. It should be noted that the Ethernet optical module 1500 may be inserted into a corresponding interface on client equipment or an OTN device shown in FIG. 1 by using the optical interface 1503, to complete related service transmission.

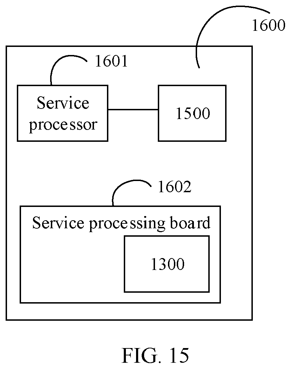

FIG. 15 is a schematic diagram of a structure of client equipment according to an embodiment of this application. Client equipment 1600 provides two types of hardware structures to implement the low-rate service carrying mentioned in method embodiments of this application. One type is based on a manner in which an Ethernet optical module 1500 shown in FIG. 14 connects to a service processor 1601. The service processor 1601 is configured to complete processing that needs to be completed before service data is transmitted to the Ethernet optical module 1500, for example, other processing such as generating the service data or performing verification on the service data. Another type is to provide a board for implementing service carrying, and the board includes the chip 1300 shown in FIG. 13.

An embodiment of this application further provides an OTN device. A hardware structure of the OTN device in this embodiment is shown in FIG. 4a. A tributary board includes the chip 1300 shown in FIG. 13. Alternatively, a tributary board includes the Ethernet optical module 1500 shown in FIG. 14.

In this embodiment of this application, a processor (for example, a processor 1301) may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams disclosed in this embodiment of this application. The general-purpose processor may be a microprocessor, any conventional processor, or the like. The steps of the method disclosed with reference to embodiments of this application may be directly performed by a hardware processor, or may be performed by using a combination of hardware and a software unit that are in the processor. Program code executed by the processor to implement the foregoing method may be stored in a memory (for example, a memory 1302). The memory may be a non-volatile memory, such as a hard disk drive (hard disk drive, HDD), or may be a volatile memory (volatile memory), such as a random access memory (random access memory, RAM). The memory is any other medium that can be used to carry or store expected program code in a form of an instruction or a data structure and that can be accessed by a computer, but is not limited thereto.

Based on the foregoing embodiment, an embodiment of this application further provides a computer-readable storage medium. The storage medium stores a software program. When the software program is read and executed by one or more processors, the method provided in any one or more of the foregoing embodiments may be implemented. The computer-readable storage medium may include any medium that can store program code, for example, a USB flash drive, a removable hard disk, a read-only memory, a random access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

These computer program instructions may be alternatively stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may be alternatively loaded onto a computer or another programmable data processing device, so that a series of operation steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. This application is intended to cover these modifications and variations of embodiments of this application provided that they fall within the scope of the claims of this application and equivalent technologies thereof.

## Claims

1. A service carrying method, wherein the method comprises:
receiving service data;
mapping the service data to one or more optical transport network (OTN) service transmission frames, wherein a rate of the one or more OTN service transmission frames is 1.25 gigabits per second (Gbps) ± 100 ppm or 10.3125 Gbps ± 100 ppm, and ppm represents a part per million; and
sending the one or more OTN service transmission frames by using an X Gigabit Ethernet transmission module, wherein a rate of the X Gigabit Ethernet transmission module matches the rate of the one or more OTN service transmission frames, and X is equal to 1 or 10.

2. The service carrying method according to claim 1, wherein the mapping the service data to one or more OTN service transmission frames specifically comprises:
mapping the service data to a plurality of optical service unit (OSU) frames, wherein each of the plurality of OSU frames is an integer multiple of a 16-byte block, the OSU frame comprises an overhead area and a payload area, the payload area is used to carry the service data, and the overhead area is used to carry a frame overhead; and
performing adaptation processing on the plurality of OSU frames that carry the service data, to obtain the plurality of OTN service transmission frames.

3. The service carrying method according to claim 2, wherein the performing adaptation processing on the plurality of OSU frames that carry the service data specifically comprises:
adding frame alignment signal information to each of the plurality of OSU frames;
adding frame alignment signal information to and performing encoding on each of the plurality of OSU frames; or
adding frame alignment signal information to and performing encoding and compression on each of the plurality of OSU frames, wherein the performing compression comprises deleting padding information in the plurality of OSU frames, and the encoding is 8B/10B encoding or 64B/66B encoding.

4. The service carrying method according to claim 3, wherein the adding frame alignment signal information to each of the plurality of OSU frames specifically comprises:
adding a frame start identifier and a frame end identifier to each of the plurality of OSU frames; or
inserting the frame alignment signal information before each of the plurality of OSU frames.

5. The service carrying method according to claim 1, wherein the mapping the service data to one or more OTN service transmission frames specifically comprises:
mapping the service data to a plurality of optical service unit (OSU) frames, wherein each of the plurality of OSU frames is an integer multiple of a 16-byte block, the OSU frame comprises an overhead area and a payload area, the payload area is used to carry the service data, and the overhead area is used to carry a frame overhead; and
mapping the plurality of OSU frames that carry the service data to one optical data unit (ODU) frame, to obtain the OTN service transmission frame.

6. The service carrying method according to claim 5, wherein the ODU frame is of a structure with four rows and 3824-byte columns, and comprises only a frame header indication, a multiframe indication, a link monitoring overhead, a payload type, and a payload area, wherein the frame header indication is used to indicate a start location of the ODU frame, the multiframe indication is used to indicate a location of the ODU frame in a group of consecutive ODU frames, the link monitoring overhead is used to perform link monitoring, the payload type is used to indicate a mapping manner of a service carried in the ODU frame, and the payload area is used to carry the plurality of OSU frames.

7. The service carrying method according to claim 5, wherein the ODU frame is of a structure with rows whose quantity is an integer multiple of 64 and 5140-bit columns, and comprises an alignment overhead and a payload area, wherein the alignment overhead is used to indicate a start location of the ODU frame, and the payload area is used to carry the plurality of OSU frames.

8. The service carrying method according to any one of claims 5 to 7, wherein the ODU frame is the OTN service transmission frame.

9. The service carrying method according to any one of claims 5 to 7, wherein the mapping the plurality of OSU frames that carry the service data to one ODU frame, to obtain the OTN service transmission frame specifically comprises:
mapping the plurality of OSU frames to one ODU frame; and
performing one or more of the following operations on the ODU frame to obtain the OTN service transmission frame:
adding FEC information, adding frame alignment signal information, and performing encoding processing, wherein the encoding processing is 8B/10B encoding processing or 64B/66B encoding processing.

10. The service carrying method according to any one of claims 1 to 9, wherein X = 1, and sending, by the X Gigabit Ethernet module, the OTN service transmission frame specifically comprises: sending the OTN service transmission frame by using a twisted pair or a 1 GE optical module.

11. The service carrying method according to any one of claims 1 to 9, wherein X = 10, and sending, by the X Gigabit Ethernet module, the OTN service transmission frame specifically comprises: sending the OTN service transmission frame by using a 10 GE optical module.

12. A service processing apparatus, wherein the apparatus comprises a memory and a processor, the memory is configured to store a computer program, and the processor is configured to perform the following method:
receiving service data;
mapping the service data to one or more optical transport network (OTN) service transmission frames, wherein a rate of the one or more OTN service transmission frames is 1.25 gigabits per second (Gbps) or 10.3125 Gbps; and
sending the OTN service transmission frame to an X Gigabit Ethernet transmission module, wherein a rate of the X Gigabit Ethernet transmission module matches the rate of the one or more OTN service transmission frames, and X is equal to 1 or 10.

13. The apparatus according to claim 12, wherein the mapping the service data to one or more OTN service transmission frames specifically comprises:
mapping the service data to a plurality of optical service unit (OSU) frames, wherein each of the plurality of OSU frames is an integer multiple of a 16-byte block, the OSU frame comprises an overhead area and a payload area, the payload area is used to carry the service data, and the overhead area is used to carry a frame overhead; and
performing adaptation processing on the plurality of OSU frames that carry the service data, to obtain the plurality of OTN service transmission frames.

14. The apparatus according to claim 12, wherein the mapping the service data to one or more OTN service transmission frames specifically comprises:
mapping the service data to a plurality of optical service unit (OSU) frames, wherein each of the plurality of OSU frames is an integer multiple of a 16-byte block, the OSU frame comprises an overhead area and a payload area, the payload area is used to carry the service data, and the overhead area is used to carry a frame overhead; and
mapping the plurality of OSU frames that carry the service data to one optical data unit (ODU) frame, to obtain the OTN service transmission frame.

15. A device, wherein the device comprises the apparatus and the X Gigabit Ethernet transmission module according to any one of claims 12 to 14.

16. A service obtaining method, wherein the method comprises:
receiving one or more optical transport network (OTN) service transmission frames by using an X Gigabit Ethernet transmission module, wherein a rate of the one or more OTN service transmission frames is 1.25 gigabits per second (Gbps) or 10.3125 Gbps, a rate of the X Gigabit Ethernet transmission module matches the rate of the one or more OTN service transmission frames, and X is equal to 1 or 10; and
obtaining, through parsing, service data from the one or more OTN service transmission frames.

17. The method according to claim 16, wherein the obtaining, through parsing, service data from the one or more OTN service transmission frames specifically comprises:
deleting frame alignment signal information from, or decoding and deleting frame alignment signal information from the one or more OTN service transmission frames to obtain a plurality of OSU frames, wherein each of the plurality of OSU frames is an integer multiple of a 16-byte block, the OSU frame comprises an overhead area and a payload area, the payload area is used to carry the service data, the overhead area is used to carry a frame overhead, and the decoding is 8B/10B decoding or 64B/66B decoding; and
obtaining, through demapping, the service data from the plurality of OSU frames.

18. The method according to claim 16 or 17, wherein the one or more OTN service transmission frames are optical data unit (ODU) frames, and the optical data unit frame is of any one of the following two structures:
a first structure is a structure with four rows and 3824-byte columns, and comprises only a frame header indication, a multiframe indication, a link monitoring overhead, a payload type, and a payload area, wherein the frame header indication is used to indicate a start location of the ODU frame, the multiframe indication is used to indicate a location of the ODU frame in a group of consecutive ODU frames, the link monitoring overhead is used to perform link monitoring, the payload type is used to indicate a mapping manner of a service carried in the ODU frame, and the payload area is used to carry the plurality of OSU frames; and
a second structure is a structure with rows whose quantity is an integer multiple of 64 and 5140-bit columns, and comprises an alignment overhead and a payload area, wherein the alignment overhead is used to indicate a start location of the ODU frame, and the payload area is used to carry the plurality of OSU frames; and
the obtaining, through parsing, service data from the one or more OTN service transmission frames specifically comprises:
obtaining, through demapping, the plurality of OSU frames from the optical data unit frame; and
obtaining, through demapping, the service data from the plurality of OSU frames.

19. The method according to claim 16, wherein the obtaining, through parsing, service data from the one or more OTN service transmission frames specifically comprises:
performing FEC decoding on the one or more OTN service transmission frames, to obtain an optical data unit (ODU) frame, wherein the optical data unit frame is used to carry a plurality of OSU frames;
obtaining, through demapping, the plurality of OSU frames from the optical data unit frame; and
obtaining, through demapping, the service data from the plurality of OSU frames.

20. The method according to claim 19, wherein the optical data unit frame is of any one of the following two structures:
a first structure is a structure with four rows and 3824-byte columns, and comprises only a frame header indication, a multiframe indication, a link monitoring overhead, a payload type, and a payload area, wherein the frame header indication is used to indicate a start location of the ODU frame, the multiframe indication is used to indicate a location of the ODU frame in a group of consecutive ODU frames, the link monitoring overhead is used to perform link monitoring, the payload type is used to indicate a mapping manner of a service carried in the ODU frame, and the payload area is used to carry the plurality of OSU frames; and
a second structure is a structure with rows whose quantity is an integer multiple of 64 and 5140-bit columns, and comprises an alignment overhead and a payload area, wherein the alignment overhead is used to indicate a start location of the ODU frame, and the payload area is used to carry the plurality of OSU frames.

21. A service processing apparatus, wherein the apparatus comprises a memory and a processor, the memory is configured to store a computer program, and the processor is configured to perform the following method:
receiving one or more optical transport network (OTN) service transmission frames sent by an X Gigabit Ethernet transmission module, wherein a rate of the one or more OTN service transmission frames is 1.25 gigabits per second (Gbps) or 10.3125 Gbps, a rate of the X Gigabit Ethernet transmission module matches the rate of the one or more OTN service transmission frames, and X is equal to 1 or 10; and
obtaining, through parsing, service data from the one or more OTN service transmission frames.

22. A device, wherein the device comprises the service processing apparatus and the X Gigabit Ethernet transmission module according to claim 21.

23. A system, wherein the system comprises the device according to claim 15 and the device according to claim 22, wherein the device according to claim 15 sends the OTN service transmission frame to the device according to claim 22.
